# FASCICULE DE BREVET EUROPEEN

(11) **EP 3 626 136 B1**
(45) Date de publication et mention de la délivrance du brevet: **21.07.2021**
(21) Numéro de dépôt: 19196987.2
(22) Date de dépôt: 12.09.2019
(51) Int. Cl.: A47J 31/44

(54) **MACHINE DE PRÉPARATION DE BOISSONS AVEC DISPOSITIF D'AGITATION ROTATIF ET CLAPET DE MISE À L'AIR D'UN CONDUIT D'ACHEMINEMENT D'EAU CHAUDE ET/OU DE VAPEUR**
GETRÄNKEZUBEREITUNGSMASCHINE MIT EINER DREH-RÜHRMASCHINE UND EINEM DURCHFLUSSVENTIL FÜR HEISSWASSER- UND / ODER DAMPFLEITUNG
BEVERAGE PREPARATION MACHINE WITH ROTARY STIRRING DEVICE AND FLOW VALVE FOR HOT WATER AND / OR STEAM DELIVERY CONDUIT

(30) Priorité: 24.09.2018 FR 1858666
(43) Date de publication de la demande: 25.03.2020
(73) Titulaire: SEB S.A., 69130 Ecully (FR)
(72) Inventeur: LEFORGEAIS, Michel, 14250 TILLY SUR SEULLES (FR); JEROME, Mickael, 53100 MAYENNE (FR); BEAUDET, Olivier, 61140 RIVES D'ANDAINE (FR); DUTOYA, Laurence, 53500 MONTENAY (FR)
(74) Mandataire: SEB Développement

(56) Documents cités:
- EP-A1- 2 243 406
- EP-A1- 2 721 980
- WO-A1-2009/118486
- FR-A1- 3 056 896
- US-A1- 2018 160 846

## Description

### Domaine technique

La présente invention concerne les appareils de distribution de boissons qui comportent un dispositif d'agitation rotatif avec distribution d'eau chaude et/ou de vapeur, notamment des machines de préparation de boissons à base de lait chaud ou froid moussé (cappuccino, latté, chocolat, cocktail...) ou à base de crème fouettée (cafés et chocolat spéciaux).

### Etat de la technique

Il est connu des machines de préparation de boissons qui comportent notamment un système de chauffe pour la production d'eau chaude et/ou de vapeur et un dispositif d'agitation rotatif, lequel comprend un outil rotatif autour d'un axe vertical et destiné à agiter une préparation contenue dans un récipient et un conduit d'acheminement de l'eau chaude et/ou de la vapeur vers l'outil rotatif de sorte à diluer et/ou réchauffer ladite préparation dans le récipient en la faisant mousser.

Une telle machine de préparation de boissons est décrite dans la demande de brevet EP2721980A1.

Selon cette demande de brevet EP2721980A1, le conduit d'acheminement comporte une partie tubulaire qui s'étend le long de l'axe vertical entre une première extrémité qui est accouplée à l'outil rotatif et une seconde extrémité qui est accouplée de manière amovible à un arbre d'entrainement au moyen d'un dispositif d'accouplement. La possibilité de démonter la partie tubulaire avec l'outil rotatif facilite leur nettoyage sous l'eau ou dans un lave-vaisselle.

Une telle mise en œuvre de machine de préparation de boissons présente des inconvénients.

En effet, la préparation contenue dans le récipient, dans laquelle est plongée la première portion d'extrémité avec l'outil rotatif, tend à remonter à l'intérieur du conduit d'acheminement en fin de cycle de préparation. Cela est dû à l'arrêt de la production d'eau chaude et/ou de vapeur, le refroidissement du système de chauffe de la machine de préparation de boissons ayant pour incidence de générer une aspiration par ledit conduit d'acheminement, en direction du système de chauffe, du fait de la condensation de la vapeur résiduelle se trouvant dans ledit conduit d'acheminement. Il en résulte un encrassement à l'intérieur de la partie tubulaire, voire également à l'intérieur du reste du conduit d'acheminement qui est indémontable ou difficilement démontable, contrairement à la partie tubulaire, et qui comporte des pièces en mouvement. L'encrassement à l'intérieur de la partie tubulaire complexifie son nettoyage, malgré la possibilité de la démonter.

En outre, lors de la réalisation d'une production de vapeur pour un moussage de lait suivi d'une production d'eau chaude pour la réalisation d'un café ou d'un thé, le système de chauffe ne refroidit pas suffisamment, ce qui a pour incidence de trop chauffer l'eau et de brûler le café ou le thé qui est préparé, celui-ci perdant de sa saveur durant sa dégustation.

On connait également des documents FR3056896, EP2243406 et US2018160846 des machines de préparation de boissons.

### Résumé de l'invention

La présente invention pallie les inconvénients précités. A cet effet, l'invention concerne une machine de préparation de boissons selon la revendication 1. La mise à l'air du conduit d'acheminement rétablit un équilibre de pression qui permet à la préparation ayant commencé à monter dans la partie tubulaire, de redescendre rapidement dans le récipient avant que cette préparation ait pu atteindre les trois quarts de la longueur de ladite partie tubulaire. Ainsi, la préparation n'atteint pas la zone d'accouplement entre ladite partie tubulaire et l'arbre d'entraînement.

Cette mise à l'air du conduit d'acheminement permet également de refroidir la chaudière lorsque celle-ci a servi à la production de vapeur alimentant le dispositif d'agitation rotatif et que cette chaudière sert également à la production d'eau chaude alimentant une chambre d'infusion pour la production de café ou de thé. Ainsi, lorsque l'utilisateur enchaîne sur la production d'un café ou d'un thé, la chaudière servant alors à la production d'eau chaude a eu le temps de refroidir un peu, ce qui évite de produire une eau à une température trop élevée pouvant brûler le café ou le thé. Bien entendu, ce problème n'apparaît pas lorsque la machine de préparation de boissons comprend une première chaudière pour la production d'eau chaude et/ou de vapeur alimentant le dispositif d'agitation rotatif et une seconde chaudière pour la production d'eau chaude alimentant la chambre d'infusion.

Selon une réalisation de la machine de préparation de boissons, le clapet de mise à l'air s'ouvre à une pression inférieure à 4 millibars, afin de disposer d'une sensibilité convenable garantissant une ouverture dudit clapet dès qu'une faible dépression se produit dans le conduit d'acheminement.

Par le clapet de mise à l'air s'ouvre à une pression inférieure à 4 millibars, on comprend que le clapet s'ouvre lorsqu'il existe une différence de pression inférieure à 4 millibars entre un côté du clapet soumis à la pression atmosphérique et un côté du clapet soumis à la pression dans le conduit d'acheminement d'eau chaude et/ou de vapeur.

Selon l'invention, le clapet de mise à l'air est du type parapluie comprenant un chapeau élastique et une tige élastique agencée perpendiculairement et de manière monobloc avec le chapeau, la tige s'étendant horizontalement le long d'un axe B et le chapeau s'étendant verticalement. En d'autres termes, le clapet présente la forme d'un T élastique pivoté à 90°.

Selon cette réalisation, le conduit d'acheminement comporte au niveau du clapet une portion de conduit horizontale agencée le long de l'axe B de la tige élastique. En outre, le conduit d'acheminement comporte au niveau du clapet une portion de conduit agencée de manière perpendiculaire à la portion de conduit horizontale, la liaison étant réalisée à proximité du chapeau.

Selon l'invention, le chapeau élastique et la tige élastique sont réalisés en silicone.

Selon la machine de préparation de boissons objet de l'invention, le dispositif d'agitation rotatif comporte un moteur électrique destiné à entrainer l'arbre d'entraînement et, ainsi, l'outil rotatif.

Selon la machine de préparation de boissons objet de l'invention, l'arbre d'entrainement comporte une partie creuse d'acheminement d'eau chaude et/ou de vapeur sur laquelle est agencée la partie tubulaire. Cette partie creuse communique avec la partie tubulaire lors de leur accouplement. Ainsi, l'eau chaude et/ou la vapeur circulent dans la partie creuse de l'arbre d'entraînement puis dans la partie tubulaire. En outre, le dispositif d'agitation rotatif comporte une boite à vapeur, ladite boîte à vapeur comportant une chambre, un canal radial d'entrée vapeur et deux paliers étanches de guidage de l'arbre d'entrainement de l'outil rotatif. Par ailleurs, la partie creuse d'acheminement d'eau chaude et/ou de vapeur est configurée pour relier la chambre à la partie tubulaire.

Selon une réalisation de la machine de préparation de boisson, la partie tubulaire du conduit d'acheminement a une longueur comprise entre 8 cm et 12 cm, de préférence de l'ordre de 10 cm.

### Brève description des figures

La description suivante met en évidence les caractéristiques et avantages de la présente invention. Cette description s'appuie sur des figures, parmi lesquelles :
- Les figures 1 et 2 illustrent deux vues d'ensemble d'un mode de réalisation d'une machine de préparation de boissons comportant un dispositif d'agitation rotatif, suivant deux positions dudit dispositif ;
- La figure 3 illustre une coupe du dispositif d'agitation rotatif mettant notamment en évidence l'assemblage de la partie tubulaire avec l'arbre d'entraînement et le conduit d'acheminement de l'eau chaude et/ou de la vapeur ;
- La figure 4 schématise un dispositif de distribution sur la machine de préparation de boissons, mettant en évidence la présence d'un clapet de mise à l'air sur le conduit d'acheminement d'eau chaude et/ou de vapeur du dispositif d'agitation rotatif ;
- La figure 5 illustre une vue d'ensemble du clapet de mise à l'air de la figure 4.

### Description détaillée

Dans la suite de la description, la machine de préparation de boissons est dénommée « machine ».

Dans la suite de la description, les termes « horizontal », « vertical », « inférieur », « supérieur », « longitudinal », « transversal », « haut », « bas », qui pourraient être employés, le seront en considération de la position de la machine reposant sur un plan de travail, en situation d'usage.

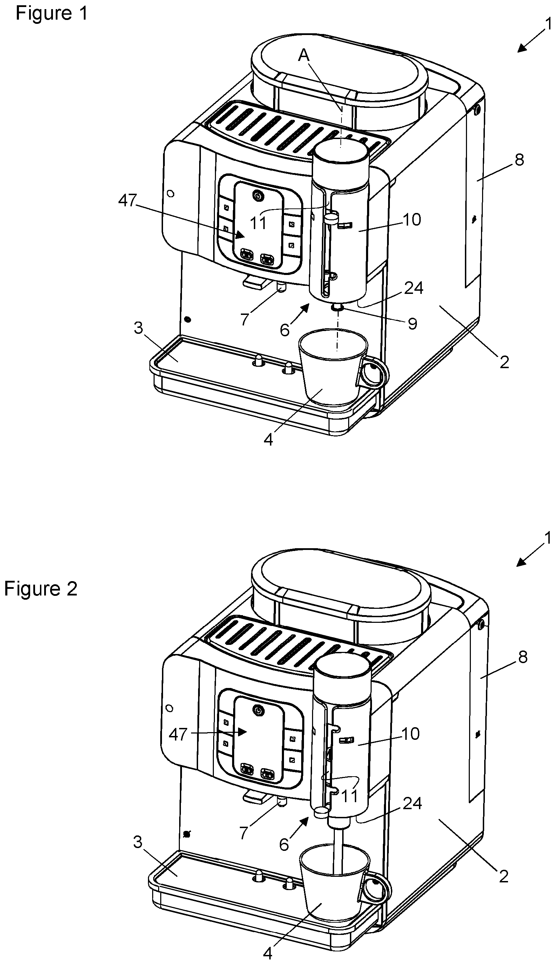

En regard des figures 1, 2 et 4, la machine 1 comporte notamment un bâti 2, un support 3 sur lequel un récipient 4 peut être disposé durant la préparation d'une boisson, un dispositif de distribution 5, un dispositif d'agitation rotatif 6 permettant d'agiter une préparation contenue dans le récipient 4 et une buse 7 permettant la distribution d'une boisson à base de café, de thé et/ou de chocolat, par exemple. Le dispositif de distribution 5 comporte un réservoir 8 contenant de l'eau froide, ledit dispositif de distribution 5 permettant d'alimenter le dispositif d'agitation rotatif 6 en eau chaude et/ou en vapeur et la buse 7 en boisson infusée ou non (café, thé, chocolat...).

Le dispositif d'agitation rotatif 6 comprend un outil rotatif 9 autour d'un axe A et destiné à coopérer avec une préparation contenue dans le récipient 4, par exemple du lait. Cet axe A est défini verticalement sur la machine 1. Le dispositif d'agitation rotatif 6 est monté en translation selon l'axe A, à l'intérieur d'une pièce de guidage 10 agencée sur le bâti 2, de sorte à permettre son déplacement selon une position haute illustrée en figure 1, où l'outil rotatif 9 est dégagé du récipient 4, et une position basse illustrée en figure 2, où l'outil rotatif 9 est inséré dans le récipient 4.

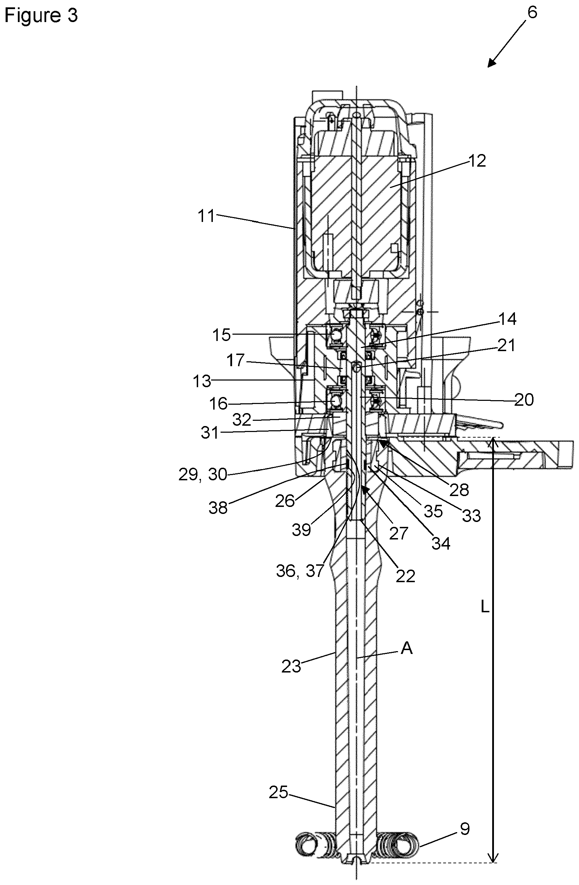

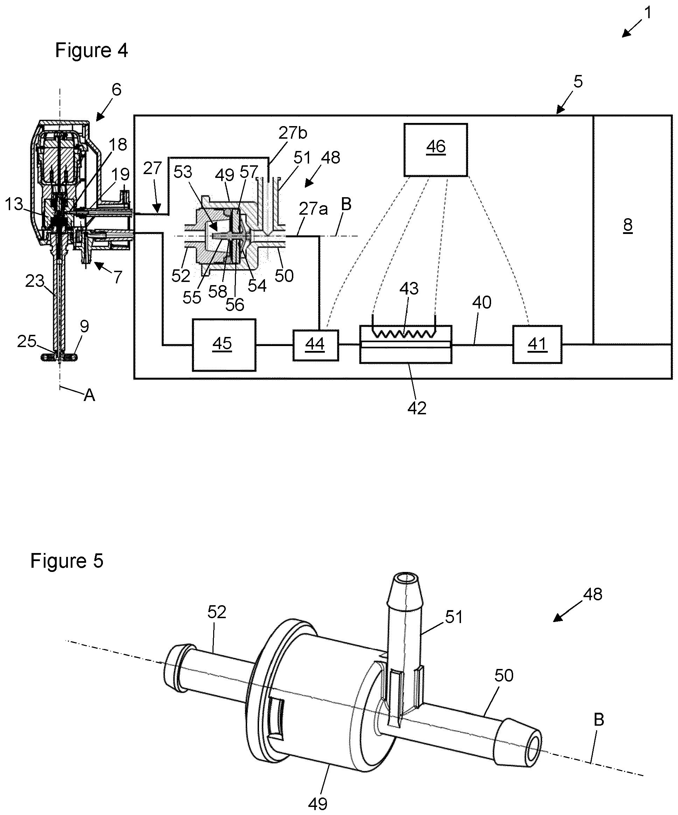

Tel qu'illustré sur la figure 3, le dispositif d'agitation rotatif 6 comporte un corps 11 monté en translation selon l'axe A sur la pièce de guidage 10 au moyen de glissières (non illustrées). A l'intérieur du corps 11 sont agencés un moteur électrique 12 et une boîte à vapeur 13. Le moteur électrique 12 entraîne en rotation selon l'axe A un arbre d'entrainement 14, lequel est monté en liaison pivot d'axe A vis-à-vis de la boîte à vapeur 13 au moyen de deux paliers 15, 16 de roulement étanche, l'étanchéité mise en œuvre entre la boîte à vapeur 13, les paliers 15, 16 et l'arbre d'entraînement 14 permettant de définir une chambre 17. Un canal radial 18 (illustré en figure 4) traverse la boîte à vapeur 13 et débouche dans la chambre 17, ce canal radial 18 étant raccordé à un conduit souple 19 (illustré en figure 4) qui permet les déplacements en translation selon l'axe A du dispositif d'agitation rotatif 6 vis-à-vis de la pièce de guidage 8, sans aucune gêne. Le conduit souple 19 alimente en eau chaude et/ou en vapeur la chambre 17. L'arbre d'entrainement 14 présente une partie creuse 20 s'étendant selon l'axe A et débouchant d'un côté dans la chambre 17 grâce à un orifice 21 traversant ladite partie creuse 20 et, de l'autre côté, sur l'extrémité inférieure 22 de l'arbre d'entraînement 14.

Tel qu'illustré sur la figure 3, le dispositif d'agitation rotatif 6 comprend une partie tubulaire 23 qui s'étend selon l'axe A sur une longueur L et passe au travers d'un fond 24 (figures 1 et 2) de la pièce de guidage 10. De préférence, la longueur L est de 10 cm, mais on pourrait prévoir une longueur L comprise en 8 cm et 12 cm.

L'extrémité inférieure 25 de la partie tubulaire 23 est assemblée avec l'outil rotatif 9, de préférence par emboîtement ou au moyen d'un assemblage à baïonnette. L'extrémité supérieure 26 de la partie tubulaire 23 est accouplée de manière amovible avec l'arbre d'entrainement 14. Ainsi, le canal souple 19, le canal radial 18, la chambre 17, la partie creuse 20 de l'arbre d'entraînement 14 et la partie tubulaire 23 définissent un conduit d'acheminement 27 d'eau chaude et/ou de vapeur vers l'outil rotatif 9.

Sur la figure 3, l'accouplement de l'extrémité supérieure 26 de la partie tubulaire 23 avec l'arbre d'entraînement 14 est mis en œuvre par l'intermédiaire d'un dispositif d'accouplement magnétique 28. Ce dispositif d'accouplement magnétique 28 met en œuvre une force d'attraction magnétique dans le sens de l'axe A, entre une paroi motrice 29 de l'arbre d'entraînement 14 et une paroi réceptrice 30 de l'extrémité supérieure 26 de la partie tubulaire 23. Cette force d'attraction magnétique permet de plaquer la paroi réceptrice 30 contre la paroi motrice 29 en sorte de maintenir assemblée l'extrémité supérieure 26 de la partie tubulaire 23 avec l'arbre d'entraînement 14 et d'engendrer la rotation de ladite partie tubulaire 23 sous l'action de la rotation de l'arbre d'entraînement 14.

Tel qu'illustré en figure 3, le dispositif d'accouplement magnétique 28 comprend une pièce de support 31 qui comporte la paroi motrice 29 et est emboîtée en force sur l'arbre d'entraînement 14, de sorte que ladite pièce de support 31 et ledit arbre d'entraînement 14 sont assujettis et forment un ensemble. Le dispositif d'accouplement magnétique 28 comprend un aimant permanent 32 qui présente une forme tubulaire et est logé à l'intérieur de la pièce de support 31 préalablement à son emboîtement en force sur l'arbre d'entraînement 14, lequel passe au travers dudit aimant permanent 32. Des moyens de blocage en rotation selon l'axe A (non illustrés) sont prévus entre la pièce de support 31 et l'aimant permanent 32. A titre d'exemple, on peut prévoir un emboîtement en force de l'aimant permanent 32 dans la pièce de support 31.

Tel qu'illustré en figure 3, le dispositif d'accouplement 28 comprend un insert 33 qui présente une forme tubulaire. L'extrémité supérieure 26 de la partie tubulaire 23, qui comporte la paroi réceptrice 30, est surmoulée sur l'insert 33, ce qui permet d'assujettir cet insert 33 sur ladite extrémité supérieure 26. Selon une réalisation préférentielle illustrée sur cette figure 3, l'insert 33 comprend une bague externe 34 et une bague interne 35 qui sont montées en force l'une dans l'autre pour former une seule et même pièce (l'insert 33). La bague externe 34 est réalisée dans un matériau ferromagnétique et la bague interne 35 est réalisée dans un acier inoxydable résistant à la corrosion en ambiance vapeur. Cette bague interne 35 est montée glissante sur l'arbre d'entraînement 14. De préférence, la bague externe 34 est réalisée dans un inox 420 ou 430 ferromagnétique et la bague interne 35 est réalisée dans un inox 304. Grâce au surmoulage de l'extrémité supérieure 26 de la partie tubulaire 23 sur l'insert 33, la bague externe 34 est complètement revêtue par la matière - un polymère - de ladite extrémité supérieure 26, ce qui protège ladite bague externe 34 contre la corrosion. La mise en place de la partie tubulaire 23, assemblée avec l'outil rotatif 9, sur l'arbre d'entrainement 14 s'effectue simplement par emboîtement. Leur retrait s'effectue également simplement en tirant dessus pour les dégager l'un de l'autre ; il suffit d'exercer une force de traction supérieure à la force d'attraction magnétique de l'aimant permanent 32.

La paroi interne 36 de la bague interne 35 est montée coulissante sur la paroi externe 37 de la partie creuse 20 de l'arbre d'entraînement 14 ; un joint d'étanchéité 38 est logé dans une gorge 39 agencée sur ladite partie creuse 20 et vient au contact de ladite paroi interne 36 lorsque la paroi réceptrice 30 est plaquée contre la paroi motrice 29, comme l'illustre la figure 3. Durant l'utilisation du dispositif d'agitation rotatif 6, l'injection d'eau chaude et/ou de vapeur peut engendrer une montée en pression dans le conduit d'alimentation 27 ; l'étanchéité mise en œuvre grâce au joint d'étanchéité 38 évite tout risque de fuite d'eau chaude et/ou de vapeur au niveau du raccordement entre la partie tubulaire 23 et l'arbre d'entrainement 14.

Tel qu'illustré sur la figure 4, le dispositif de distribution 5 de la machine 1 comprend un circuit d'alimentation 40 qui comporte une pompe 41 et une chaudière 42 incorporant un élément chauffant 43. Le circuit d'alimentation 40 est raccordé en amont au réservoir 8 et en aval à une électrovanne 44 qui permet soit d'alimenter en eau chaude et/ou en vapeur le conduit d'acheminement 27 du dispositif d'agitation rotatif 6, soit d'alimenter en eau chaude une chambre d'infusion 45 qui est elle-même raccordée à la buse 7. Un circuit de commande 46 permet d'actionner la pompe 41, l'élément chauffant 43 de la chaudière 42 et l'électrovanne 44 en fonction du programme de préparation de boissons sélectionné sur la machine 1 qui comporte pour cela un clavier de commande 47 (figures 1 et 2) permettant de sélectionner une préparation de boisson. Lorsque la machine 1 fonctionne en mode de préparation d'une boisson de type café, thé ou chocolat, le circuit de commande 46 actionne la pompe 41 et l'élément chauffant 43 pour produire une eau chaude à une température comprise entre 95°C et 100°C et commande l'électrovanne 44 pour alimenter la chambre d'infusion 45, la boisson infusée s'évacuant par la buse 7. Lorsque la machine 1 fonctionne en mode de préparation d'un moussage de lait ou d'une crème fouettée, le circuit de commande 46 actionne la pompe 41 et l'élément chauffant 43 pour produire de la vapeur d'eau et commande l'électrovanne 44 pour alimenter le conduit d'acheminement 27, l'eau chaude ou la vapeur s'évacuant par l'extrémité inférieure 25 de la partie tubulaire 23 qui est assujettie à l'outil rotatif 9 et plongée dans la préparation contenue dans le récipient 4.

L'arrêt de l'élément chauffant 43 de la chaudière 42 engendre le refroidissement de la vapeur résiduelle se trouvant dans le conduit d'acheminent 27. Cette vapeur résiduelle condense, ce qui génère une aspiration par ledit conduit d'acheminement 27. Il en résulte une remontée de la préparation à l'intérieur de la partie tubulaire 23 plongée dans ladite préparation, ce qui a pour incidence de l'encrasser. Tel qu'illustré en regard des figures 4 et 5, un clapet de mise à l'air 48 permet d'empêcher la préparation de remonter dans plus des trois quarts de la longueur L de la partie tubulaire 23 pour éviter que ladite préparation atteigne l'extrémité inférieure 22 de l'arbre d'entraînement 14, ce qui empêche ladite préparation d'atteindre l'insert 33. Cela empêche également ladite préparation de remonter dans la chambre 17 du conduit d'acheminement 27, qui n'est pas accessible par l'utilisateur et peut donc être difficilement nettoyée.

Le clapet de mise à l'air 48 comprend un connecteur 49 à trois voies 50, 51, 52 en forme de T inversé. La première voie 50 est connectée sur une portion amont 27a du conduit d'acheminement 27, cette portion amont 27a s'étendant horizontalement selon un axe B. La seconde voie 51 est disposée en équerre vers le haut à proximité de la première voie 50 et elle est connectée sur une portion aval 27b du conduit d'achement 27, cette portion aval 27b s'étendant perpendiculairement vers le haut par rapport à la portion amont 27a dudit conduit d'acheminement 27. La troisième voie 52 est disposée dans le prolongement de la première voie 50, selon l'axe B, et elle est mise à l'air libre. Le clapet de mise à l'air 48 comprend une valve 53 en forme de parapluie ou de T couché qui est logée dans le connecteur 49. Cette valve 53 comprend un chapeau 54 disposé verticalement et une tige 55 qui s'étend du chapeau 54 le long de l'axe B en direction de la troisième voie 52, tandis que ledit chapeau 54 est disposé à proximité de la première voie 50 et de la seconde voie 51.

La valve 53 est réalisée en une seule pièce monobloc dans un matériau élastomère, de préférence en silicone. La tige 55 de la valve 53 passe au travers d'un orifice 56 agencé sur une paroi intermédiaire 57 à l'intérieur du connecteur 49, ladite tige 55 étant maintenue en translation selon l'axe B vis-à-vis de ladite paroi intermédiaire 57, comme on le voit sur la figure 4, d'un côté par un bourrelet 58 et de l'autre par le chapeau 54.

Lorsque de l'eau chaude et/ou de la vapeur circule dans le conduit d'acheminement 27, le chapeau 54 est plaqué contre la paroi intermédiaire 57 par la force du fluide qui pénètre par la première voie 50 selon l'axe B, ce qui assure une circulation normale de l'eau chaude et/ou de la vapeur en passant par la portion amont 27a puis par la portion aval 27b dudit conduit d'acheminement 27.

Lorsqu'une dépression se produit dans le circuit d'acheminement 27, le chapeau 54 se décolle de la paroi intermédiaire 57 du fait de son élasticité, ce qui tire sur la tige 55 agencée le long de l'axe B ; la paroi intermédiaire 57 retient la tige 55 qui s'étire du fait de son élasticité, ce qui permet de réduire son diamètre et de laisser pénétrer par l'orifice 56, l'air provenant de la troisième voie 52. Cet air se propage alors dans le conduit d'acheminement 27. Ainsi, la pression s'équilibre entre la partie tubulaire 23 du conduit d'acheminement 27 et le récipient 4 contenant la préparation dans laquelle est plongée ladite partie tubulaire 23 avec l'outil rotatif 9, ce qui permet à ladite préparation de redescendre de la partie tubulaire 23.

De préférence, le chapeau 54 et la tige 55 de la valve 53 sur le clapet 49 sont dimensionnés pour se déformer et ouvrir l'orifice 56, sous une pression inférieure à 4 millibars.

Cette mise à l'air du conduit d'acheminement 27 permet également de faire baisser la température de la chaudière 42 à la suite d'une production de vapeur. Cela permet avantageusement d'éviter de trop chauffer l'eau lorsqu'après l'utilisation du dispositif d'agitation rotatif 6, l'utilisateur réalise immédiatement une infusion de café ou de thé ; une eau trop chaude issue de la chaudière 42 et injectée dans la chambre d'infusion 45 aurait pour effet de brûler le café ou le thé.

La description qui précède d'un mode préférentiel de réalisation n'est pas limitative, des variantes pouvant être envisagées sans sortir du cadre de l'invention.

A titre d'exemple, la machine 1 pourrait comprendre simplement le dispositif d'agitation rotatif 6, la préparation de café, de thé et/ou de chocolat pouvant être réalisée sur une machine de préparation de boissons indépendante disposant uniquement d'un dispositif de distribution de boissons.

On pourrait aussi prévoir deux chaudières indépendantes, une première chaudière alimentant le dispositif d'agitation rotatif 6 par le biais du conduit d'acheminement 27 comportant le clapet de mise à l'air 48 et une seconde chaudière alimentant la buse 7 en passant par la chambre d'infusion 45. Dans ce cas, l'électrovanne 44 serait déplacée en amont des deux chaudières.

L'insert 33 du dispositif d'accouplement magnétique 28 pourrait être réalisé au moyen d'une seule bague en matériau ferromagnétique, ladite bague étant alors noyée dans l'extrémité supérieure 26 de la partie tubulaire 23 par un surmoulage. On peut aussi prévoir d'autres mises en œuvre de dispositifs d'accouplement qu'un dispositif d'accouplement magnétique 28, par exemple un manchon élastomère.

## Revendications

1. Machine (1) de préparation de boissons comprenant au moins une chaudière (42) et un dispositif d'agitation rotatif (6) comprenant un outil rotatif (9) autour d'un axe A et destiné à agiter une préparation contenue dans un récipient (4), ledit dispositif d'agitation rotatif (6) comportant un conduit d'acheminement (27) d'eau chaude et/ou de vapeur issue de l'au moins une chaudière (42) vers l'outil rotatif (9), ledit conduit d'acheminement (27) comportant une partie tubulaire (23) de longueur L, qui s'étend le long de l'axe A entre une première extrémité (25) sur laquelle est agencé l'outil rotatif (9) et une seconde extrémité (26) agencée sur un arbre d'entrainement (14) au moyen d'un dispositif d'accouplement (28), **caractérisé en ce que** le conduit d'acheminement (27) comporte un clapet de mise à l'air (48) dudit conduit (27) lorsque celui-ci passe en dépression, ledit clapet de mise à l'air (48) étant dimensionné de manière à empêcher ladite préparation de remonter vers l'intérieur de la partie tubulaire (23), le clapet de mise à l'air (48) étant du type parapluie comprenant un chapeau (54) élastique et une tige (55) élastique agencée perpendiculairement et de manière monobloc avec le chapeau (54), la tige (55) s'étendant horizontalement le long d'un axe B et le chapeau (55) s'étendant verticalement, le chapeau (54) et la tige (55) étant réalisés en silicone.

2. Machine (1) de préparation de boissons selon la revendication 1, dans laquelle le clapet de mise à l'air (48) s'ouvre à une pression inférieure à 4 millibars.

3. Machine (1) de préparation de boissons selon l'une quelconque des revendications 1 à 2, dans laquelle le conduit d'acheminement (27) comporte au niveau du clapet (48) une portion de conduit horizontale (27a) agencée le long de l'axe B de la tige (55).

4. Machine (1) de préparation de boissons selon la revendication 3, dans laquelle le conduit d'acheminement (27) comporte au niveau du clapet (48) une portion de conduit (27b) agencée de manière perpendiculaire à la portion de conduit horizontale (27a), la liaison étant réalisée à proximité du chapeau (54).

5. Machine (1) de préparation de boissons selon l'une quelconque des revendications 1 à 4, dans laquelle le dispositif d'agitation rotatif (6) comporte un moteur électrique (12) destiné à entrainer l'outil rotatif (9).

6. Machine (1) de préparation de boissons selon l'une quelconque des revendications 1 à 5, dans laquelle l'arbre d'entrainement (14) comporte une partie creuse (20) d'acheminement d'eau chaude et/ou de vapeur sur laquelle est agencée la partie tubulaire (23).

7. Machine (1) de préparation de boissons selon la revendication 6, dans laquelle le dispositif d'agitation rotatif (6) comporte une boite à vapeur (13), ladite boîte à vapeur (13) comportant une chambre (17), un canal radial (19) d'entrée vapeur, deux paliers (15, 16) étanches de guidage de l'arbre d'entrainement (14), et dans laquelle la partie creuse (20) d'acheminement d'eau chaude et/ou de vapeur relie la chambre (17) à la partie tubulaire (23).

8. Machine (1) de préparation de boissons selon l'une quelconque des revendications 1 à 7, dans laquelle la partie tubulaire (23) du conduit d'acheminement (27) a une longueur comprise entre 8 cm et 12 cm, de préférence de l'ordre de 10 cm.

## Patentansprüche

1. Maschine (1) zur Zubereitung von Getränken, umfassend mindestens einen Kessel (42) und eine Drehschüttelvorrichtung (6), ein Drehwerkzeug (9) um eine Achse A umfassend, und dazu bestimmt, eine Zubereitung zu schütteln, die in einem Behälter (4) enthalten ist, wobei die Drehschüttelvorrichtung (6) eine Zuführleitung (27) für Heißwasser und/ oder Dampf aus dem mindestens einen Kessel (42) zum Drehwerkzeug (9) umfasst, wobei die Zuführleitung (27) einen rohrförmigen Teil (23) der Länge L umfasst, der sich entlang der Achse A zwischen einem ersten Ende (25), an dem das Drehwerkzeug (9) angeordnet ist, und einem zweiten Ende (26), das anhand einer Kopplungsvorrichtung (28) an einer Antriebswelle (14) angerodnet ist, erstreckt, **dadurch gekennzeichnet, dass** die Zuführleitung (27) eine Entlüftungsklappe (48) der Leitung (27) umfasst, wenn diese auf Unterdruck übergeht, wobei die Entlüftungsklappe (48) derart bemessen ist, um zu verhindern, dass die Zubereitung ins Innere des rohrförmigen Teils (23) ansteigt, wobei die Entlüftungsklappe (48) in der Art eines Regenschirms ist, der eine biegsame Kappe (54) und einen biegsamen Stift (55) umfasst, der senkrecht und in einem Stück mit der Kappe (54) angeordnet ist, wobei sich der Stift (55) horizontal entlang einer Achse B erstreckt und sich die Kappe (55) vertikal erstreckt, wobei die Kappe (54) und der Stift (55) aus Silikon gefertigt sind.

2. Maschine (1) zur Zubereitung von Getränken nach Anspruch 1, wobei sich die Entlüftungsklappe (48) bei einem Druck von weniger als 4 millibar öffnet.

3. Maschine (1) zur Zubereitung von Getränken nach einem der Ansprüche 1 bis 2, wobei die Zuführleitung (27) im Bereich der Klappe (48) einen horizontalen Leitungsabschnitt (27a) umfasst, der entlang der Achse B des Stifts (55) angeordnet ist.

4. Maschine (1) zur Zubereitung von Getränken nach Anspruch 3, wobei die Zuführungsleitung (27) im Bereich der Klappe (48) einen Leitungsabschnitt (27b) umfasst, der senkrecht zum horizontalen Leitungsabschnitt (27a) angeordnet ist, wobei die Verbindung in der Nähe der Kappe (54) realisiert wird.

5. Maschine (1) zur Zubereitung von Getränken nach einem der Ansprüche 1 bis 4, wobei die Drehschüttelvorrichtung (6) einen Elektromotor (12) umfasst, der zum Antreiben des Drehwerkzeugs (9) bestimmt ist.

6. Maschine (1) zur Zubereitung von Getränken nach einem der Ansprüche 1 bis 5, wobei die Antriebswelle (14) einen hohlen Teil (20) zum Zuführen von Heißwasser und/ oder Dampf umfasst, auf dem der rohrförmige Teil (23) angeordnet ist.

7. Maschine (1) zur Zubereitung von Getränken nach Anspruch 6, wobei die Drehschüttelvorrichtung (6) einen Dampfkasten (13) umfasst, wobei der Dampfkasten (13) eine Kammer (17), einen radialen Dampfeingangskanal (19), zwei dichte Lager (15, 16) zum Führen der Antriebswelle (14) umfasst, und wobei der hohle Teil (20) zum Zuführen von Heißwasser und/ oder Dampf die Kammer (17) mit dem rohrförmigen Teil (23) verbindet.

8. Maschine (1) zur Zubereitung von Getränken nach einem der Ansprüche 1 bis 7, wobei der rohrförmige Teil (23) der Zuführleitung (27) eine Länge aufweist, die zwischen 8 cm und 12 cm enthalten ist, vorzugsweise in der Größenordnung von 10 cm ist.

## Claims

1. Beverage preparation machine (1) comprising at least one boiler (42) and a rotary stirring device (6) comprising a rotary tool (9) about an axis A and intended to stir a preparation contained in a container (4), said rotary stirring device (6) comprising a conveying guide pipe (27) for conveying hot water and/or steam from the at least one boiler (42) to the rotary tool (9), said conveying guide pipe (27) comprising a tubular portion (23) of length L, that extends along the axis A between a first end (25) on which the rotary tool (9) is arranged and a second end (26) arranged on a drive shaft (14) by means of a coupling device (28), **characterised in that** the conveying guide pipe (27) comprises a vent valve (48) of said guide pipe (27) when the latter transitions to a negative pressure, said vent valve (48) being dimensioned to prevent said preparation from rising towards the interior of the tubular portion (23), the vent valve (48) being of the umbrella type comprising an elastic cap (54) and an elastic rod (55) arranged perpendicularly and as a single block with the cap (54), the rod (55) extending horizontally along an axis B and the cap (55) extending vertically, the cap (54) and the rod (55) being made of silicone.

2. Beverage preparation machine (1) according to claim 1, wherein the vent valve (48) opens at a pressure less than 4 millibars.

3. Beverage preparation machine (1) according to any of claims 1 to 2, wherein the conveying guide pipe (27) comprises at the valve (48) a horizontal guide pipe portion (27a) arranged along the axis B of the rod (55).

4. Beverage preparation machine (1) according to claim 3, wherein the conveying guide pipe (27) comprises at the valve (48) a guide pipe portion (27b) arranged perpendicularly to the horizontal guide pipe portion (27a), the connection being made in the vicinity of the cap (54).

5. Beverage preparation machine (1) according to any of claims 1 to 4, wherein the rotary stirring device (6) comprises an electric motor (12) intended to drive the rotary tool (9).

6. Beverage preparation machine (1) according to any of claims 1 to 5, wherein the drive shaft (14) comprises a hollow portion (20) for conveying hot water and/or steam on which the tubular portion (23) is arranged.

7. Beverage preparation machine (1) according to claim 6, wherein the rotary stirring device (6) comprises a steam box (13), said steam box (13) comprising a chamber (17), a radial channel (19) for steam input, two sealed bearings (15, 16) for guiding the drive shaft (14), and in which the hollow portion (20) for conveying hot water and/or steam connects the chamber (17) to the tubular portion (23).

8. Beverage preparation machine (1) according to any of claims 1 to 7, wherein the tubular portion (23) of the conveying guide pipe (27) has a length comprised between 8 cm and 12 cm, preferably about 10 cm.
